**Europäisches Patentamt**

**European Patent Office**

**Office européen des brevets**

(19)

(11) Veröffentlichungsnummer : **0 330 747 B1**

(12) # EUROPÄISCHE PATENTSCHRIFT

(45) Veröffentlichungstag der Patentschrift :
13.11.91 Patentblatt 91/46

(51) Int. Cl.$^5$ : **C02F 1/40, B01D 17/02,
E03F 5/16**

(21) Anmeldenummer : **88120454.9**

(22) Anmeldetag : **07.12.88**

(54) Vorrichtung zum Zerlegen von Kondensat.

(30) Priorität : **27.02.88 DE 3806358**

(43) Veröffentlichungstag der Anmeldung :
**06.09.89 Patentblatt 89/36**

(45) Bekanntmachung des Hinweises auf die
Patenterteilung :
**13.11.91 Patentblatt 91/46**

(84) Benannte Vertragsstaaten :
**AT BE CH DE ES FR GB IT LI NL SE**

(56) Entgegenhaltungen :
**DE-A- 3 329 869
DE-A- 3 428 777
GB-A- 2 084 480**

(73) Patentinhaber : **Koch, Berthold
Jasminweg 26
W-4040 Neuss 1 (DE)**

(72) Erfinder : **Koch, Berthold
Jasminweg 26
W-4040 Neuss 1 (DE)**

(74) Vertreter : **Türk, Gille, Hrabal
Brucknerstrasse 20
W-4000 Düsseldorf 13 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft eine Vorrichtung zum Zerlegen von Kondensat, das beispielsweise aus Öl und Wasser besteht, in seine Bestandteile, wobei diese Vorrichtung einen Zulauf für Kondensat wie ölbeladenes Wasser, einen Beruhigungsraum für das zugelaufene Kondensat, einen Überlauf für die Abfuhr von aufgeschwommenen Verunreinigungen wie Öl und einen Ablauf für das von den Verunreinigungen befreite Wasser aufweist.

In Drucksystemen, beispielsweise nach ölgeschmierten Verdichtern, wird das in nachgeschalteten Abscheidern wie Kühlern, Kesseln, Trocknern, Filtern und Rohrleitungen abgeschiedene Kondensat zwangsläufig durch Öl und andere Verunreinigungen belastet. Dieses Kondensat muß nicht nur aus dem Drucksystem abgeleitet werden, sondern es muß auch in seine Bestandteile zerlegt werden, bevor man das Wasser in stehende oder fließende Gewässer oder die Kanalisation ableiten kann. Obwohl das Kondensat aus einem Drucksystem nur von Zeit zu Zeit abgelassen wird, nämlich wenn sich eine bestimmte Menge angesammelt hat, müssen für die Aufbereitung ständig Mittel bereitstehen, weil bei einem automatischen Ablassen des Kondensats nicht vorauszusehen ist, wann jeweils eine Entleerung erfolgt.

Öl kann man von Wasser beispielsweise dadurch trennen, daß man das Kondensat in einen Beruhigungsraum einleitet und dort das leichtere Öl auf die Oberfläche des Wassers aufschwimmen läßt. Dadurch läßt sich zwar eine einigermaßen befriedigende Trennung von Öl und Wasser erzielen, jedoch ist nicht gewährleistet, daß das aus einer derartigen Vorrichtung abfließende Wasser auch wirklich rein ist, nicht zuletzt deshalb, weil Öl beispielsweise auch im Wasser dispergiert, emulgiert oder gar gelöst sein kann.

Der Erfindung liegt die Aufgabe zugrunde, eine Vorrichtung zum Zerlegen von Kondensat wie zum Trennen von Öl und Wasser zu schaffen, die ohne Betriebsunterbrechungen stets einsatzbereit ist und die gewährleistet, daß eine einwandfreie Zerlegung des Kondensats in seine Bestandteile erfolgt, damit mit dem abfließenden Wasser keine Verunreinigungen abgeführt werden können.

Diese Aufgabe wird erfindungsgemäß bei einer Vorrichtung der eingangs genannten Art dadurch gelöst, daß sie wenigstens einen selbsttätig zu reinigenden Filtereinsatz für den Durchlauf des aus dem unteren Bereich des nach außen gekapselten Beruhigungsraumes abgezogenen Wassers enthält. Mit der erfindungsgemäßen Vorrichtung wird das Kondensat nicht nur durch einen Aufschwemmvorgang in seine Grundbestandteile wie Wasser und Öl zerlegt. Vielmehr erfolgt zusätzlich eine Reinigung des ablaufenden Wassers durch Filtrierung, so daß über den Überlauf nur aufgeschwemmte Verunreinigungen wie Öl abgeführt werden müssen, während gewährleistet ist, daß mit dem Wasser keine Verunreinigungen ablaufen können, weil das Wasser vor dem Ablauf filtriert wird. Der hierzu vorgesehene Filtereinsatz ist selbsttätig zu reinigen, d.h. die Vorrichtung braucht nicht abgeschaltet zu werden, um den Filtereinsatz bzw. die Filtereinsätze von Zeit zu Zeit mit dem Ziel zu reinigen, ein Zusetzen derselben mit abgeschiedenen Verunreinigungen zu verhindern.

Gemäß einer praktischen Ausführungsform der Erfindung können die Filtereinsätze jeweils lösbar in einem vom Beruhigungsraum der Vorrichtung abgetrennten Rohr angeordnet sein, wobei diese Rohre in Reihe geschaltet sind und am Ende einen Ablauf für das gereinigte Wasser enthalten, während am vorderen Ende des Rohrsystemes ein Überlauf für abgeschiedene Verunreinigungen vorgesehen ist, damit diese Verunreinigungen während der Reinigungsphase abgeführt werden können.

Jeder Filtereinsatz ist beispielsweise ein flüssigkeitsdurchlässiger Sack, der eine Füllung aus Filtermaterial enthält, wobei als Filtermaterial in einer ersten Stufe Koaleszenzkörper und in einer zweiten Stufe Aktivkohle verwendet werden können.

Nach einem weiteren Merkmal der Erfindung ist an die Vorrichtung ein Gasdrucksystem, insbesondere ein Luftdrucksystem, angeschlossen, mit dessen Hilfe man die Filtereinsätze im Gegenstrom reinigen kann, ohne die Vorrichtung insgesamt abschalten zu müssen. Dieses Drucksystem kann außerdem zum Steuern der Ablaßventile für die abfließenden aufgeschwommenen Verunreinigungen wie Öl und das abfließende gereinigte Wasser benutzt werden.

Zum Reinigen der Vorrichtung wird Druckmittel wie Druckluft durch das nach außen dicht verschließbare Ende der in Reihe geschalteten Rohre in das letzte Rohr von oben eingeleitet, so daß die Wasserfüllung in diesem Rohr nach unten herausgedrückt wird. Bei dieser Gegenstrombewegung werden am Filtermaterial abgelagerte angesammelte Verunreinigungen im Gegenstrom zurückgespült und insbesondere ein am Einlaufende der Filter gebildeter Ölkuchen weggespült. Ist die in diesem Filterrohr normalerweise befindliche Flüssigkeit aus demselben vollständig herausgedrückt worden, tritt Druckluft von unten in das nächste Rohr ein und kann in diesem in Blasenform durch den Koaleszenzfilter nach oben steigen, wodurch der in diesem Rohr befindliche Filtereinsatz zusätzlich gereinigt wird. Das aus dem letzten Rohr verdrängte Wasser fließt zunächst in Gegenstromrichtung durch den Filtereinsatz des vorhergehenden Rohres und spült zuerst in diesem Filtereinsatz abgelagerte Verunreinigungen zum Einlaßende des Filters. Im ersten Rohr steigt der Wasserspiegel entsprechend der Menge des nachgedrückten Wassers an, so daß überschüssiges Wasser mit dem losgespülten Filtrat über den am oberen Ende des Rohres befindlichen Überlauf in den Beruhigungsraum der Vorrichtung übertreten kann. Die aufgeschwommenen Verunreinigungen bzw. das Filtrat werden mit überschüssigem Wasser in den Beruhigungsraum abgeführt. Hierbei ist eine sichere Trennung von Verunreinigungen wie Öl und Wasser nicht notwendig, weil diese überlaufende Flüssigkeit nicht unmittelbar abfließen kann, sondern dem normalen Reinigungsvorgang der Vorrichtung unterworfen wird.

Die Umsteuerung zwischen normaler Betriebsweise und Reinigungsbetrieb der Vorrichtung kann automatisch erfolgen, beispielsweise mittels Niveauschaltern, welche entsprechend dem Flüssigkeitsstand im Rohrsystem, der ein Maß für das Zusetzen des Filters ist, betätigt werden. Steigt der Flüssigkeitsspegel im Rohrsystem an, was auf einen erhöhten Durchstromwiderstand der Filtereinsätze und dementsprechend auf eine ansteigende Verschmutzung der Filtermaterialien zurückzuführen ist, besorgt ein diesen Niveauanstieg feststellender Niveauschalter die Umschaltung der Vorrichtung vom normalen Betrieb in Reinigungsbetrieb. Zu diesem Zweck werden die Abläufe der Vorrichtung gesperrt. Gleichzeitig wird Druckluft in das Filtersystem eingeleitet, um die Filtereinsätze im Gegenstrom durchzuspülen. Dadurch steigt auch das Flüssigkeitsniveau im Beruhigungsraum, weil einerseits aus dem Filterrohrsystem Flüssigkeit in den Beruhigungsraum übergeleitet wird und weil andererseits aus dem Beruhigungsraum nichts mehr abfließen kann, dieser jedoch für die Zufuhr von zu zerlegendem Kondensat offen bleibt. Dieser Niveauanstieg im Beruhigungsraum wird von einem zweiten Niveauschalter für den Alarmfall erfaßt.

Nach ablauf einer vorgegebenen Reinigungszeit wird die Zufuhr von Druckluft in das Filterrohrsystem abgeschaltet und der Überdruck im Filter abgebaut, so daß sich in diesem System wieder der normale Flüssigkeitspegel einstellen kann. Dieser Zustand wird vom ersten Niveauschalter registriert. Ist im Beruhigungsraum der Flüssigkeitspegel wieder auf das normale Niveau abgesunken, wird das Ventil in der Abflußleitung für die Verunreinigungen wieder geöffnet wird, so daß der normale Reinigungsbetrieb der Vorrichtung fortgesetzt werden kann. Das Ventil in der Abflußleitung für gereinigtes Wasser kann schon vorher geöffnet werden, weil der Flüssigkeitspegel im Filterrohrsystem unabhängig vom Flüssigkeitspegel im Beruhigungsraum ist.

Durch die Erfindung wird eine Vorrichtung zum Zerlegen oder Trennen von Kondensat in Wasser und Verunreinigungen wie Öl geschaffen, die vollautomatisch arbeitet und auch ohne Betriebsunterbrechungen automatisch wirksam gereinigt werden kann, so daß sich Überwachungen auf übliche Inspektionen beschränken können.

Die vorstehend beschriebene Reinigung der Filtereinsätze durch Rückspülung kann aber auch nach vorgegebenen Intervallen erfolgen. Die Umsteuerung durch Niveauschalter erfolgt dann nur, wenn sich die Filtereinsätze schon nach kürzerer Zeit zu stark zugesetzt haben.

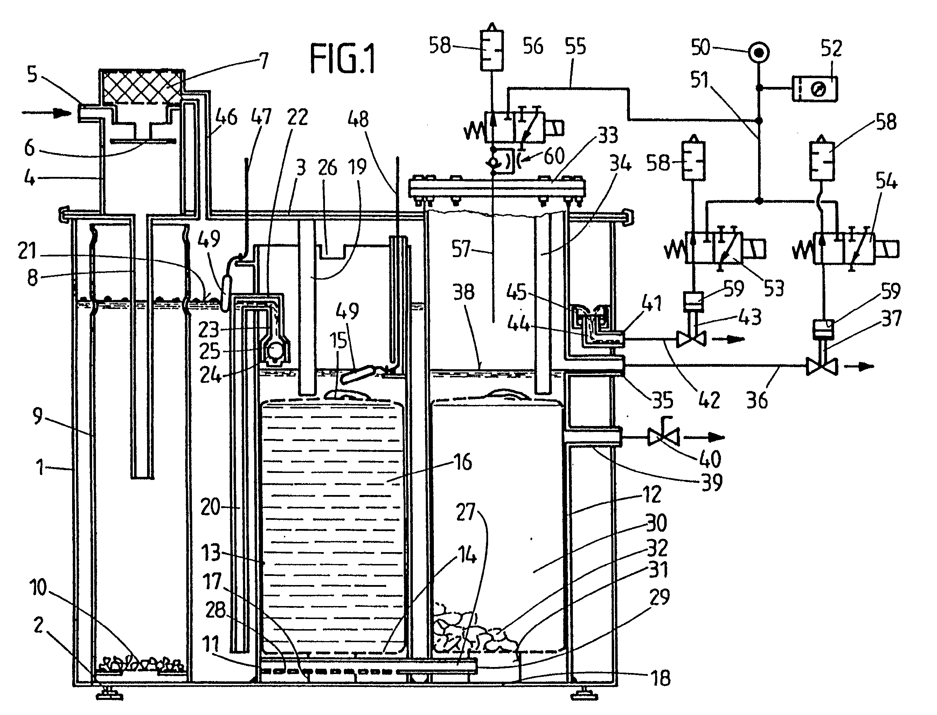

In der Zeichnung ist ein Ausführungsbeispiel einer erfindungsgemäßen Vorrichtung zum Zerlegen von Kondensat in Öl und Wasser und zum Trennen dieser Komponenten voneinander schematisch in einem senkrechten Schnitt dargestellt, und zwar in den Figuren 1 bis 3 in verschiedenen Betriebszuständen.

Die Vorrichtung weist ein beckenartiges Behältnis (1) auf, das mit Füßen (2) versehen ist. Die Oberseite des Behältnisses (1) ist mit einem Deckel (3) dicht verschlossen.

Auf dem Deckel (3) ist ein Kopf (4) angeordnet, in den über einen Stutzen (5) ein Zulauf für Kondensat wie ölbeladenes Wasser mündet. In dem Kopf (4) ist eine horizontale Prallplatte (6) angeordnet, gegen welche das vielfach pulsierend oder stoß- bzw. schwallweise zulaufende Kondensat prallt, bevor es nach unten ablaufen kann. Oberhalb dieser Prallplatte (6) ist im Kopf (4) ein luftdurchlässiger Filter (7) angeordnet, durch den die mit dem ölbeladenen Wasser oder Kondensat herangeführte Luft entweichen kann.

Das von der Luft getrennte ölbeladene Wasser läuft nach unten in das Behältnis (1) und gelangt in ein Tauchrohr (8), welches am unteren Ende des Kopfes (4) an den Deckel (3) diesen durchdringend angeschlossen ist und in ein Rohr (9) mündet, das auswechselbar aufrecht im Behältnis (1) steht und dicht über seinem unteren Ende ein Sieb (10) enthält, durch welches das Wasser hindurchtreten kann, welches jedoch den groben Schmutz zurückhält. Das untere Ende des Rohres (9) kann auch geschlossen sein. In diesem Falle befindet sich in etwa halber Höhe des Rohres ein in das Behältnis (1) führender Auslauf.

Neben dem Rohr (9) sind nebeneinander zwei weitere Rohre (11) und (12) aufrechtstehend im Behältnis (1) befestigt, die einen größeren Durchmesser als das Rohr (9) aufweisen. Diese Rohre (11) und (12) sind an ihren unteren Enden gegenüber dem Innenraum des Beältnisses (1) abgedichtet.

Im Rohr (11) ist ein Sack (13) auswechselbar angeordnet, dessen Enden (14) und (15) für Wasser durchlässig sind, während die Seitenwand weniger oder überhaupt nicht wasserdurchlässig ist. Dieser aus Gewebe bestehende Sack (13) ist mit hier nur angedeuteten Koaleszenzscheiben (16) gefüllt und legt sich im Betrieb mit enger Toleranz gegen die zylindrische Innenwand des Rohres (11). Der Sack (13) ist auf Haltern (17) im Abstand über den Boden (18) des Behältnisses (1) abgestützt, während ein am Deckel (3) des Behältnisses (1) befestigter Niederhalter (19) verhindert, daß der Sack (13) im Rohr (11) hochsteigen kann.

Die Koaleszenzscheiben können auch als Paket zusammengehalten sein. In diesem Falle haben die Scheiben einen Außendurchmesser, der dem Innendurchmesser des Rohres (11) entspricht.

In das obere Ende des Rohres (11) mündet ein nahe am Boden (18) des Behältnisses (1) beginnendes Steigrohr (20), das in Höhe des normalen Flüssigkeitsspiegels (21) im Behältnis (1) eine U-förmige Umlenkung (22) enthält. Der im Rohr (11) nach unten führende Schenkel (23) des Steigrohres (20) enthält ein Rückschlagventil (24), das im dargestellten Ausführungsbeispiel eine Kugel (25) aufweist, welche leichter als Wasser ist und gegen einen Sitz gedrückt wird, wenn der Flüssigkeitsstand im Rohr (11) ansteigt, was weiter unten näher erläutert wird.

Am oberen offenen Ende ist das Rohr (11) mit wenigstens einem Ausschnitt (26) versehen, der als Überlauf dient und dessen Funktionsweise ebenfalls weiter unten beschrieben wird.

Die nebeneinander fest im Behältnis (1) angeordneten Rohre (11) und (12) sind an ihren unteren Enden durch eine horizontal verlaufende Rohrleitung (27) miteinander verbunden, deren Unterseite innerhalb des Rohres (11) mit Löchern (28) versehen ist, durch die Wasser treten kann, während die Rohrleitung (27) mit einem offenen Ende (29) in das Rohr (12) mündet.

Im Rohr (12) ist ebenfalls ein aus Gewebe bestehender Sack (30) angeordnet, der auf am Boden (18) des Behältnisses (1) befestigten Haltern (31) abgestützt ist. Dieser Sack (30) ist mit Aktivkohle (32) gefüllt und legt sich mit enger Toleranz gegen die Innenwand des Rohres (12). Das obere Ende des Rohres (12) ist durch den Deckel (3) des Behältnisses (1) nach außen geführt und mittels einer lösbaren Platte (33) druckdicht verschlossen. An dieser Platte (33) ist ein Niederhalter (34) für den Sack (30) befestigt. Der Sack (30) ist für Flüssigkeit wie Wasser und für Luft durchlässig.

Oberhalb des oberen Endes des Sackes (30) und somit auch oberhalb des unteren Endes des Niederhalters (34) ist aus dem Rohr (12) durch die Seitenwand des Behältnisses (1) ein Stutzen (35) nach außen geführt, der zur Abfuhr des gereinigten Wassers dient. Dieser Stutzen mündet in eine nur schematisch angedeutete Leitung (36), in welche ein Absperrventil (37) eingebaut ist. Der Stutzen (35) befindet sich unterhalb des normalen Flüssigkeitsspiegels (21) im Behältnis (1), so daß bei geöffnetem Absperrventil (37) der Flüssigkeitsspiegel (38) in den Rohren (11) und (12) unterhalb des normalen Flüssigkeitsspiegels (21) im Behältnis (1) und auch unterhalb des Rückschlagventiles (24) liegt.

Unterhalb des Stutzens (35) ist ein weiterer Stutzen (39) aus dem Rohr (12) durch die Seitenwand des Behältnisses (1) nach außen geführt. Ein angeschlossener Hahn (40), der beispielsweise von Hand betätigt wird, ist zum Entnehmen von Wasserproben bestimmt.

Oberhalb des aus dem Rohr (12) durch die Seitenwand des Behältnisses (1) nach außen führenden Stutzens (35) ist ein weiterer Stutzen (41) vorgesehen, der neben dem Rohr (12) aus dem Behältnis (1) nach außen führt und in eine Leitung (42) mündet, in der ein Absperrventil (43) angeordnet ist. Dieser Stutzen (41) dient zur Abfuhr von auf der im Behältnis (1) befindlichen Flüssigkeit aufgeschwommenem Öl und sonstigen Verunreinigungen. Im Inneren des Behältnisses (1) ist der Stutzen (41) mit einem senkrecht nach oben führenden Schenkel (44) versehen, auf dem ein nach oben offener Kragen (45) verschiebbar sitzt, der als Überlauf dient. Der höhenverstellbare obere Rand des Kragens (45) bestimmt die Höhe des normalen Flüssigkeitsspiegels (21) im Behältnis (1), so daß die auf der Oberfläche der Flüssigkeitsfüllung aufgeschwommenen Verunreinigungen über den oberen Rand des Kragens (45) in den Stutzen (41) überlaufen können, wenn das Absperrventil (43) geöffnet ist und dementsprechend das übergelaufene Material abströmen kann, während das Wasser im Behältnis (1) verbleibt.

Auf dem Deckel (3) ist eine Entlüftungsleitung (46) befestigt, die in den Filter (7) führt und zum Ableiten von Luft aus dem oberen Teil des Behältnisses (1) dient, damit sich dort kein Luftstau bilden kann.

Durch den Deckel (3) sind zwei Niveauschalter (47) und (48) in das Innere geführt, wobei der Niveauschalter (47) im Behältnis (1) auf der Außenseite des Rohres (11) einen hochschwenkbar gelagerten Schwimmer (49) und der Niveauschalter (48) innerhalb des Rohres (11) einen ebenfalls hochschwenkbar gelagerten gleichen Schwimmer (49) aufweist.

Die Steuerung der Vorrichtung erfolgt mittels Druckluft, die von einer im einzelnen nicht dargestellten Druckluftquelle (50) geliefert wird. An eine für die Zufuhr der Druckluft dienende Leitung (51) ist eine Wartungseinheit (52) zum Einstellen und Ablesen des Druckes angeschlossen. Die Leitung (51) führt zu zwei Drei-Wege-Ventilen (53) und (54), welche den Absperrventilen (43) und (37) zugeordnet sind und zum Betätigen dieser Absperrventile dienen.

Eine Zweigleitung (55) führt zu einem weiteren Drei-Wege-Ventil (56), das in einer in das Rohr mündenden Druckluftleitung (57) angeordnet ist.

Jedem Drei-Wege-Ventil (53), (54) und (56) ist jeweils ein Schalldämpfer (58) zugeordnet, um aus dem System abgelassene Druckluft ohne Lärmbelästigung abführen zu können.

Bei normalem Betrieb befinden sich die Drei-Wege-Ventile (53) und (54) in der in Fig. 1 dargestellten Position, so daß ein Betätigungszylinder (59) jedes der Absperrventile (37) und (43) durch den betreffenden Schalldämpfer (58) entlüftet ist. Das betreffende Absperrventil ist offen, so daß gereinigtes Wasser durch die Leitung (36) und aufgeschwommene Verunreinigungen durch die Leitung (42) aus der Vorrichtung abfließen können. Das Drei-Wege-Ventil (56) befindet sich ebenfalls in der in Fig. 1 gezeigten Position, so daß die Druckleitung (57) durch ein Schellentlüftungsventil (60) hindurch und über den Schalldämpfer (58) entlüftet ist.

Bei diesem in Fig. 1 dargestellten normalen Betriebszustand sind die Niveauschalter (47) und (48) inaktiv, wobei deren Schwimmer (49) mehr oder weniger stark nach unten hängen. Im Behältnis (1) befindet sich außerhalb der Rohre (11) und (12) der Flüssigkeitsspiegel (21) auf dem durch den als Überlauf dienenden Kragen (45) bestimmten Niveau. Innerhalb der Rohre (11) und (12) befindet sich der Flüssigkeitsspiegel (38) auf dem durch den als Ablauf dienenden Stutzen (35) bestimmten Niveau. Das Rückschlagventil (24) ist offen, so daß durch das Steigrohr (20) aufgrund des Prinzips der kommunizierenden Röhren hochsteigende Flüssigkeit durch die Umlenkung (22) in das Rohr (11) übertreten kann, und zwar entsprechend der Menge der durch den Anschlußstutzen (5) zulaufenden Kondensat-Flüssigkeit.

Im Behältnis (1) schwimmen die Verunreinigungen, welche leichter als Wasser sind, zum größten Teil außerhalb der Rohre (11 und 12) auf die Oberfläche der Wasserfüllung auf und sammeln sich am Flüssigkeitsspiegel (21), von wo sie über den oberen Rand des Kragens (45) überlaufen und in den Stutzen (41) zum Ableiten gelangen können. Das aus dem unteren Teil des Behältnisses (1) durch das Steigrohr (20) in das Rohr (11) gelangende Wasser ist von groben Verschmutzungen bereits befreit. Innerhalb der Rohre (11) und (12) erfolgt eine Feinreinigung, damit das in der Vorrichtung behandelte Wasser mit ausreichendem Reinheitsgrad ablaufen kann.

Im normalen Betrieb sinkt das in das Rohr (11) eingeleitete Wasser durch den in diesem Rohr angeordneten Sack (13) nach unten und tritt dann in das Rohr (12) über, wo es durch den dort befindlichen Sack (30) nach oben steigt und schließlich durch den Stutzen (35) ablaufen kann. Auf dem Weg durch die Säcke (13 und 30) werden im Wasser noch befindliche Schmutzstoffe von den Koaleszenzscheiben (16) und der Aktivkohle (32) gebunden, so daß das Wasser schließlich vollkommen gereinigt ablaufen kann.

Der an und in den Säcken (13 und 30) zurückgehaltene Schmutz führt mit der Zeit dazu, daß sich die Füllungen der Säcke immer mehr zusetzen und sich vor den Filtereinsätzen ein Ölkuchen bildet, so daß der dem in das Rohr (11) eingeleiteten Wasser entgegengesetzte Durchstromwiderstand zunimmt. Das führt zu einem Rückstau und Anstieg des Flüssigkeitsspiegels (38) im Rohr (11), so daß dieser nach längerer Betriebszeit höher als der Flüssigkeitsspiegel (38) im Rohr (12) liegt. Um dem entgegenzuwirken, muß die Vorrichtung gereinigt werden.

Die Dauer, bis ein nicht mehr zulässiger Verschmutzungsgrad erreicht worden ist, läßt sich nicht genau vorausberechnen. Deshalb müßte, wenn man bestimmte Reinigungsintervalle vorgeben will, stets früher als eigentlich notwendig gereinigt werden, wozu es notwendig sein könnte, die Vorrichtung zu öffnen und die Filtereinsätze zu Reinigungszwecken herauszunehmen. Dies ist nicht nur umständlich, sondern auch kostenaufwendig.

Bei der hier beschriebenen Vorrichtung erfolgt die Reinigung selbsttätig, wenn dies notwendig ist, ohne daß dazu Eingriffe von außen erforderlich wären.

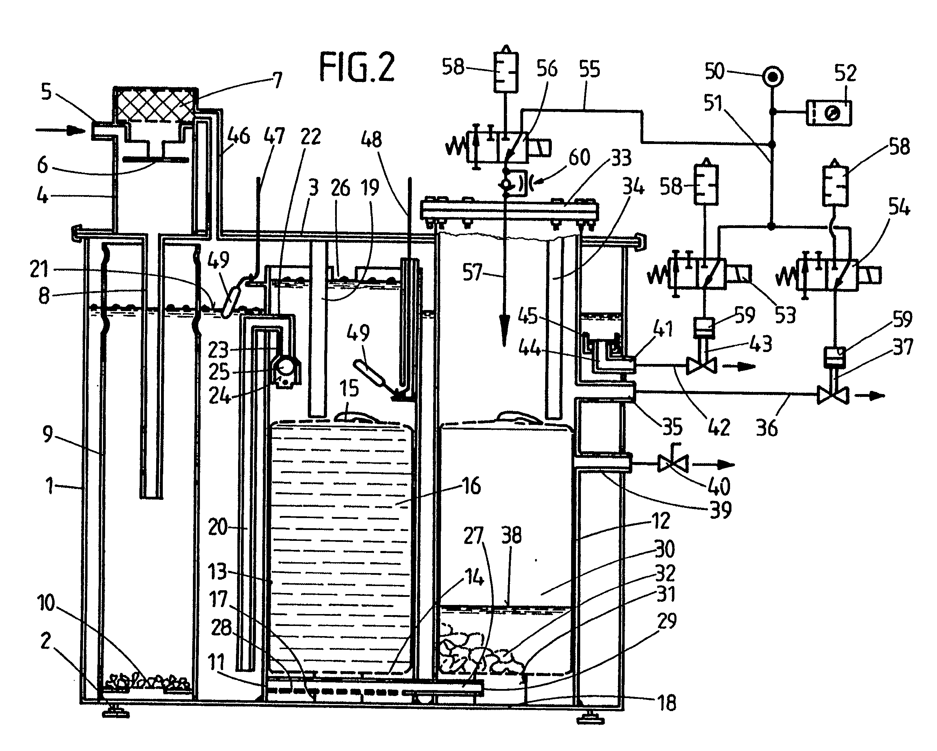

Steigt der Flüssigkeitsspiegel im Rohr (11) über das normale Niveau an, so wird der Schwimmer (49) des Niveauschalter (48) nach oben bewegt. Gelangt er in etwa horizontale Position, so daß sich der Flüssigkeitsspiegel dicht unterhalb des Rückschlagventiles (24) befindet, gibt der Niveauschalter (48) Steuersignale an die Drei-Wege-Ventile (53), (54) und (56), die sich verstellen, um nunmehr Druckluft in die Steuerzylinder (59) der Absperrventile (37) und (43) zu leiten und außerdem Druckluft durch die Leitung (57) von oben in das Rohr (12) einströmen zu lassen. Diese Situation ist in Fig. 2 dargestellt. Die Absperrventile (37) und (43) werden geschlossen, so daß weder Wasser noch Verunreinigungen weiter abströmen können.

Die durch die Leitung (57) in das nach außen druckdicht gekapselte Rohr (12) einströmende Druckluft drückt das im Rohr (12) befindliche Wasser zurück, so daß dessen Spiegel (38) bedeutend abgesenkt wird. Entsprechend steigt der Wasserspiegel im Rohr (11), wodurch zunächst das Rückschlagventil (24) geschlossen wird. Gelangt der Wasserspiegel an die Ausnehmung (26), können durch diese auf der Wasseroberfläche (38) befindliche aufgestiegene Verunreinigungen in den Hauptteil des Behältnisses (1) überströmen. Da das Absperrventil (43) geschlossen ist, steigt auch der Wasserspiegel (21) im Behältnis (1) über das normale Niveau an, und zwar wegen der aus dem Rohr (11) überlaufenden Flüssigkeit und auch weiter nachfließender zu zerlegender und zu reinigender Flüssigkeit. Dies ist ebenfalls aus Fig. 2 zu erkennen.

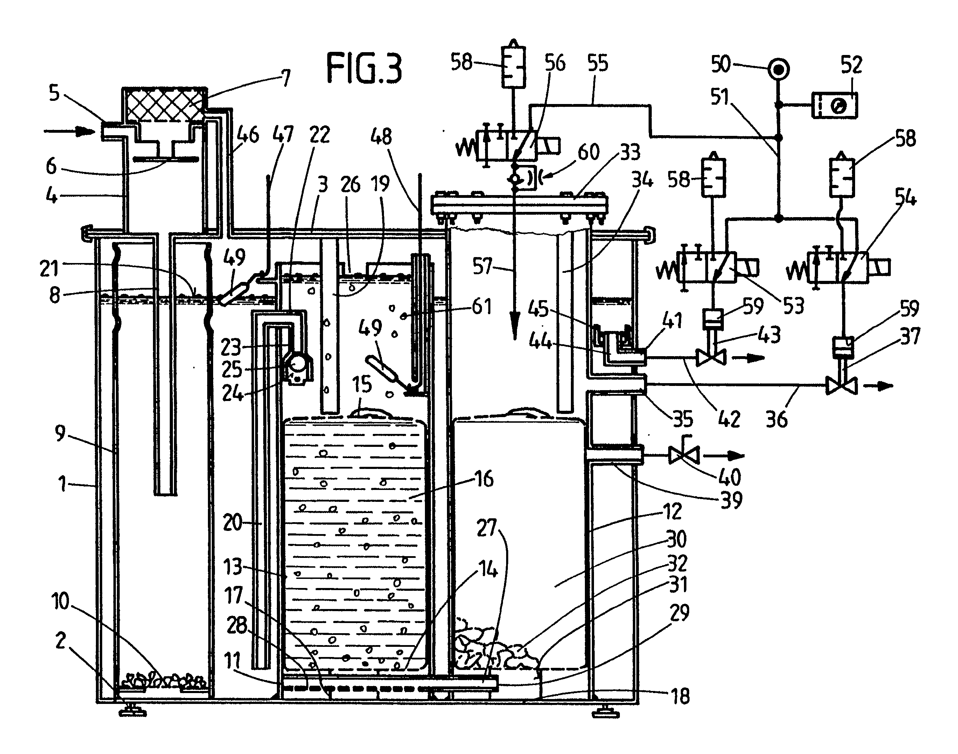

Hat die in das Rohr (12) eingeleitete Druckluft die Flüssigkeit aus dem Rohr (12) ganz verdrängt, gelangt sie von unten auch in das Rohr (11), wie Fig. 3 zeigt. Die Druckluft steigt in Form von Luftblasen (61) im Rohr (11) nach oben und reinigt dabei im Gegenstrom zusätzlich die im Sack (13) befindlichen Koaleszenzscheiben (16). Diese hochgestiegene Luft kann durch die Entlüftungsleitung (46) aus dem mehr oder weniger druckdicht gekapselten Behältnis (1) zum Filter (7) strömen und von dort nach außen entweichen.

Durch das Ansteigen des Flüssigkeitsspiegels (21) im Behältnis (1) wird der Schwimmer (49) des Niveauschalters (47) nach oben bewegt. Bei Betriebsstörungen oder im Alarmfall gelangt er in eine Position, in welcher der Niveauschalter (47) aktiv wird und ein Steuersignal erzeugt. Dieses Steuersignal kann ein Abschalten der Vorrichtung im Alarmfall bewirken.

Nach Beendigung der Rückspül-Reinigung der Filtereinsätze wird die Druckluftzufuhr in das Rohr (12) unterbrochen und dieses durch das in die in Fig. 1 dargestellte Position umgestellte Drei-Wege-Ventil (56) durch den Schalldämpfer (58) entlüftet. Dadurch kann wieder Flüssigkeit im Rohr (12) hochsteigen, wodurch der Flüssigkeitsspiegel (38) auf das ursprüngliche Niveau ansteigt und im Rohr (11) entsprechend absinkt. Das Rückschlagventil (24) öffnet wieder, so daß aus dem Hauptteil des Behältnisses (1) Flüssigkeit nachlaufen kann und dadurch der Flüssigkeitsspiegel (21) im Behältnis (1) wieder auf das normale Niveau zurückgeht. Der Schwimmer (49) des Niveauschalters (48) gelangt in seine ursprüngliche Betriebsposition. Die Drei-Wege-Ventile (53) und (54) kehren in die in Fig. 1 gezeigte Position zurück, und die Steuerzylinder (59) der Absperrventile (37) und (43) werden durch den betreffenden Schalldämpfer (58) entlüftet. Beide Absperrventile öffnen wieder, so daß sowohl gereinigtes Wasser als auch Verunreinigungen abfließen können.

Die Vorrichtung befindet sich nun wieder im normalen Betriebszustand. Es ist erkennbar, daß die Reinigung der in den Rohren (11) und (12) befindlichen Filtereinsätze nicht selbsttätig zum jeweils notwendigen Zeitpunkt selbsttätig durchgeführt werden kann, sondern daß zum Reinigen auch keine Betriebsunterbrechungen notwendig sind, denn durch den Stutzen (5) kann auch während der Reinigungsphase zu reinigendes Wasser oder Kondensat zufließen, das von der Vorrichtung aufbereitet wird, wenn deren Reinigungsphase abgeschlossen ist.

## Patentansprüche

1. Vorrichtung zum Zerlegen von Kondensat, das beispielsweise aus Öl und Wasser besteht, in seine Bestandteile, mit einem Zulauf für Kondensat, einem Beruhigungsraum für das zugelaufene Kondensat, einem Überlauf für die Abfuhr von aufgeschwommenen Verunreinigungen wie Öl und einem Ablauf für das von den Verunreinigungen befreite Wasser, **dadurch gekennzeichnet,** daß sie wenigstens einen selbsttätig zu reinigenden Filtereinsatz (13 ; 30) für den Durchlauf des aus dem unteren Bereich des nach außen gekapselten Beruhigungsraumes (1) abgezogenen Wassers enthält.

2. Vorrichtung nach Anspruch 1, dadurch gekennzeichnet, daß jeder Filtereinsatz (13 ; 30) lösbar jeweils in einem vom Beruhigungsraum (1) abgetrennten Rohr (11, 12) angeordnet ist und die Rohre für die einzelnen Filtereinsätze in Reihe miteinander geschaltet sind.

3. Vorrichtung nach Anspruch 1 oder 2, dadurch gekennzeichnet, daß ein Filtereinsatz (13) Koaleszenzkörper (16) und ein diesem nachgeschalteter Filtereinsatz (30) Aktivkohle (32) oder ähnlich adsorbtionsfähiges Material aufweist.

4. Vorrichtung nach Anspruch 3, dadurch gekennzeichnet, daß jeder Filtereinsatz (13 ; 30) einen flüssigkeitsdurchlässigen Sack aufweist, der eine Füllung (16 ; 32) aus Filtermaterial enthält.

5. Vorrichtung nach Anspruch 3, dadurch gekennzeichnet, daß die Koaleszenzkörper zu einem Paket zusammengesetzte Filterscheiben aus offenzelligem Schaumstoff sind.

6. Vorrichtung nach einem der Ansprüche 1 bis 5, dadurch gekennzeichnet, daß an das obere Ende des nach außen dicht verschließbaren letzten Filter-Rohres (12) eine Druckgasquelle (50) anschließbar ist und das erste der Filterrohre (11) am oberen Ende einen in den Beruhigungsraum (1) führenden Überlauf (26) aufweist.

7. Vorrichtung nach Anspruch 6, dadurch gekennzeichnet, daß der in das erste Filter-Rohr (11) führende Zulauf (20) für zu filterndes Wasser ein von der in diesem Rohr befindlichen Flüssigkeit zu schließendes Rückschlagventil (24) enthält.

8. Vorrichtung nach einem der Ansprüche 1 bis 7, dadurch gekennzeichnet, daß zum Steuern und Überwachen des Betriebes der Vorrichtung auf den Pegel der Flüssigkeitsfüllungen ansprechende Niveauschalter (47, 48) vorgesehen sind.

9. Vorrichtung nach Anspruch 8, dadurch gekennzeichnet, daß ein Niveauschalter (47) im Beruhigungsraum (1) und ein weiterer Niveauschalter (48) im ersten Filter-Rohr (11) angeordnet ist.

## Claims

1. Apparatus for separating condensate, which e.g. consists of oil and water, into its constituents, with a feed for condensate, a settling chamber for the fed in condensate, an overflow for removing suspended impurities such as oil and a drain for the water freed from the impurities, characterized in that it contains at least one automatically cleanable filter element (13, 30) for the passage of the water removed from the lower region of the settling chamber (1) which is encased with respect to the outside.

2. Apparatus according to claim 1, characterized in that each filter element (13, 30) is detachably arranged in a tube (11, 12) separated from the settling chamber (1) and the tubes for the individual filter elements are interconnected in series.

3. Apparatus according to claims 1 or 2, characterized in that a filter element (13) has coalescence bodies (16) and a filter element (30) connected downstream of the same has activated carbon (32) or a similar absorbent material.

4. Apparatus according to claim 3, characterized in that each filter element (13, 30) has a liquid-permeable bag, which contains a filter material filling (16, 32).

5. Apparatus according to claim 3, characterized in that the coalescence bodies are open-cell foam filter disks formed into a pack.

6. Apparatus according to one of the claims 1 to 5, characterized in that a pressurized gas source (50) can be connected to the upper end of the last filter tube (12), which can be tightly sealed with respect to the outside and the first filter tube (11) at the upper end has an overflow (26) leading into the settling chamber (1).

7. Apparatus according to claim 6, characterized in that the feed (20) for the water to be filtered leading into the first filter tube (11) contains a check valve (24) to be closed by the liquid present in said tube.

8. Apparatus according to one of the claims 1 to 7, characterized in that level switches (47, 48) responding to the level of the liquid fillings are provided for controlling and monitoring the operation of the apparatus.

9. Apparatus according to claim 8, characterized in that one level switch (47) is located in the settling chamber (1) and a further level switch (48) in the first filter tube (11).

## Revendications

1. Dispositif pour décomposer en ses parties constituantes un condensat constitué par exemple d'huile et d'eau, comportant un conduit d'amenée pour le condensat, une chambre de stabilisation pour le condensat amené, un trop-plein pour l'évacuation des impuretés flottantes telles que de l'huile, et un conduit d'évacuation pour l'eau libérée des impuretés, **caractérisé** en ce qu'il contient au moins un élément filtrant autonettoyant (13 ; 30) que doit traverser l'eau prélevée dans la région inférieure de la chambre de stabilisation (1), chambre qui est fermée de manière étanche vis-à-vis de l'extérieur.

2. Dispositif selon la revendication 1, caractérisé en ce que chaque élément filtrant (13 ; 30) est disposé de manière amovible dans un tube respectif (11, 12), séparé de la chambre de stabilisation (1), et les tubes des différents éléments filtrants sont reliés en série.

3. Dispositif selon la revendication 1 ou 2, caractérisé en ce qu'un élément filtrant (13) présente des corps de coalescence (16), et un élément filtrant consécutif (30) présente du charbon actif (32) ou un matériau adsorbant similaire.

4. Dispositif selon la revendication 3, caractérisé en ce que chaque élément filtrant (13 ; 30) présente un sac perméable aux liquides, qui contient une charge (16 ; 32) de matériau filtrant.

5. Dispositif selon la revendication 3, caractérisé en ce que les corps de coalescence sont des disques filtrants en matière éponge qui sont réunis en paquet.

6. Dispositif selon l'une quelconque des revendications 1 à 5, caractérisé en ce qu'une source de gaz comprimé (50) peut être raccordée à l'extrémité supérieure du dernier tube de filtration (12), qui peut être obturé hermétiquement vis-à-vis de l'extérieur, et le premier (11) des tubes de filtration présente, à son extrémité supérieure, un trop-plein (26) menant dans la chambre de stabilisation (1).

7. Dispositif selon la revendication 6, caractérisé en ce que le conduite (20) amenant l'eau à filtrer dans le premier tube de filtration (11) présente un clapet antiretour (24), qui peut être fermé par le liquide présent dans ce tube.

8. Dispositif selon l'une quelconque des revendications 1 à 7, caractérisé en ce que des commutateurs de niveau (47, 48), réagissant au niveau des remplissages de liquide, sont prévus pour commander surveiller le fonctionnement du dispositif.

9. Dispositif selon la revendication 8, caractérisé en ce qu'un commutateur de niveau (47) est disposé dans la chambre de stabilisation (1), et un autre commutateur de niveau (48) dans le premier tube de filtration (11).

FIG.1

# FIG.2

EP 0 330 747 B1

FIG.3

EP 0 330 747 B1